# EUROPEAN PATENT SPECIFICATION

(11) **EP 1 750 338 B1**
(45) Date of publication and mention of the grant of the patent: **11.03.2009**
(21) Application number: 05425582.3
(22) Date of filing: 05.08.2005
(51) Int. Cl.: H02G 3/04

(54) **A separator element for a mesh cable duct and a mesh cable duct comprising such element**
Trennelement für Gitterkabelkanal und Gitterkabelkanal mit einen solchen Element
Elément séparateur métallique pour chemin de câble en treillis et chemin de câble en treillis comportant cet element

(43) Date of publication of application: 07.02.2007
(73) Proprietor: BTICINO S.P.A., 20154 Milano (IT)
(72) Inventor: Spagnoli, Gian Piero, 21051 Arcisate (VA) (IT); Finco, Alan, 15047 Spinetta Marengo (AL) (IT)
(74) Representative: Deambrogi, Edgardo

(56) References cited:
- FR-A- 2 613 146
- US-A- 6 023 024

## Description

The present invention relates to cable-duct systems for industrial ducting and, more particularly, to mesh cable-ducts. Specifically, the invention relates to a separator element for a mesh cable duct of the type defined in the preamble to Claim 1.

A separator element is used conventionally inside a cable duct to comply with circuit-separation, electromagnetic-insulation or cable-arrangement requirements.

A separator may be used for physical separation between cables of ordinary circuits and cables of safety circuits when they are all installed in the same duct, in order to conform to the installation standards which require the safety circuits to be independent of the other circuits so that an electrical breakdown, an intervention, or a modification in an ordinary circuit does not compromise the operation of the safety circuits.

A metal separator is used to comply with predetermined requirements for the electromagnetic compatibility of an installation, for example, when signal cables and power cables are housed in the same duct.

A plastics separator is installed for purely cable-arrangement requirements, for example, if the same duct houses cables for different uses and destinations, such as coaxial cables and optical fibres for the transmission of video and data signals to different areas, and hence with different extraction points.

The prior art offers rudimentary solutions to the need for simple and efficient separation of the cables in a conduit or duct; these solutions consist of metal or plastics partitions plates which are glued or screwed to the bottom surface of the conduit/duct.

These solutions are used without distinction for closed or perforated conduits, mesh or ladder ducts.

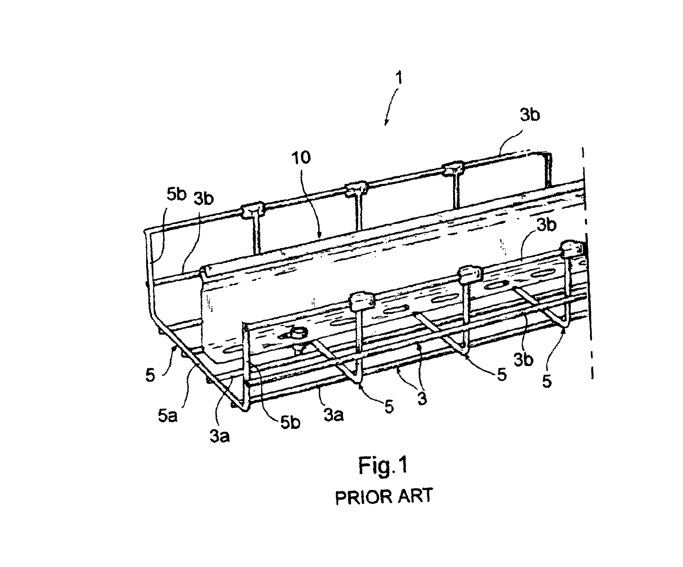

An example of the construction of a separator element according to the prior art fitted in a mesh duct is shown in Figure 1. It consists of a panel which is fixed, by means of a plate-like foot portion, to a base longitudinal wire of the duct by means of a screw, a clamping plate which can extend at least partially around the wire, and a clamping nut.

US 6 023 024 discloses a partition element for a mesh cable duct, which is suitable to be coupled releasably with the duct by means of retainers, so as to divide the cable-housing space along a longitudinally extending portion of the duct into at least a pair of adjacent longitudinal compartments. The partition element is adapted to be coupled with a mesh of the base of the duct by means of retainers provided with fastening means for fixing to the transversely extending threads of the duct, and has a plate portion which projects into the cable-housing space.

The greatest disadvantage of these solutions is that it is difficult to ensure the continuity of the separator element also in the region of direction-changing accessories such as flat, upward or downward bends.

Thin plastics or sheet-metal separator panels are flexible and deformable and can be fixed in a flat bend accessory in a bent condition which is achieved by deformation by fixings such as screws or clips. Separator panels which are curved in a longitudinal plane, on the other hand, have to be produced specially for each size of upward or downward bend accessory.

The object of the invention is to provide a separator element for a mesh cable duct which can be used both in straight duct portions and in bend accessories.

A further object of the invention is to provide a separator element which can comply with the requirements for the arrangement of the cables inside a duct, which enables the arrangement of the cables inside a duct, which enables the cables extending in the compartments of the duct to be identified easily and quickly, and which permits very easy output branching-off of the cables, allowing for simple and rapid installation and setting-up of the power and/or signal circuits.

According to the present invention, these objects are achieved by means of a separator element having the characteristics specified in Claim 1.

Specific embodiments of the separator element are the subjects of the dependent claims.

A further subject of the invention is a mesh cable duct comprising at least one separator element as defined above.

In summary, the present invention is based on the principle of the production of a "modular" metallic wire separator element simply for the arrangement of the cables in a mesh duct which - owing to its nature - does not involve compliance with electromagnetic-compatibility requirements, combining practicality of use and installation with compactness of the element.

Since, for mesh ducts, the bend accessories, whether they be flat bends, upward bends or downward bends, can easily be produced from straight duct modules ("duct module" meaning a minimum duct portion included between two transverse wires) by shearing of some of the wires and deformation of the remaining wire portions by bending, the separator element of the invention can be coupled - without modification - with any duct module, whether it forms part of a straight portion or of a bend accessory.

Advantageously, the provision of a single type of separator element, possibly reproduced in several height categories, drastically reduces the number of accessories for a series of cable-duct systems, and consequently storage costs.

The construction of the wire separator element also advantageously enables two or more longitudinal compartments to be demarcated within the cable-housing space without, however, leading to an actual physical and visual separation between them, thus enabling the cables which extend in the various compartments to be identified easily and quickly and permitting very easy output branching-off of the cables.

Finally, the separator element of the invention can be coupled firmly with the base of the duct simply by interference with portions of the longitudinal and transverse wires forming a mesh of the base of the duct, and hence without requiring the use of clamping accessories or operating tools, permitting quick and easy installation and configuration of a cable duct as well as setting-up of power and/or signal circuits.

Further characteristics and advantages of the invention will be explained in greater detail in the following detailed description of an embodiment thereof which is given by way of non-limiting example with reference to the appended drawings, in which:
Figure 1 is a perspective view of a portion of mesh cable duct with a separator element according to the prior art,
Figure 2 is a perspective view of a separator element of the invention,

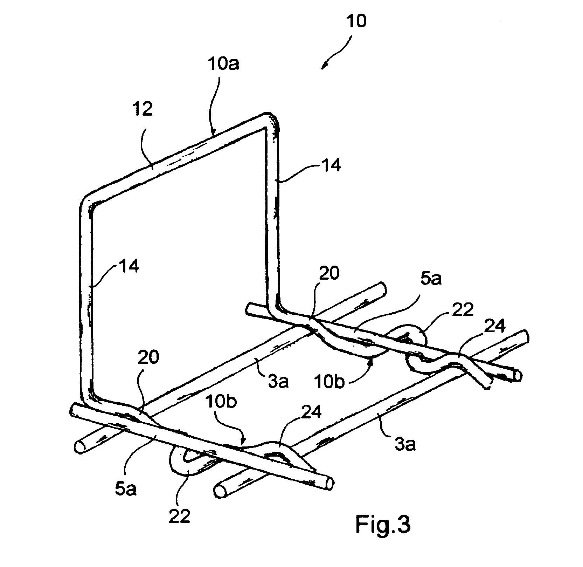

Figure 3 is a perspective view of the separator element of Figure 2 in the condition in which it is fixed to a base mesh of a mesh cable-duct,
Figure 4 is a perspective view of a portion of mesh cable ducting with a flat bend using separator elements of the invention, and
Figure 5 is a perspective view of a portion of mesh cable ducting with an upward bend using separator elements of the invention.

In the following description and claims, terms such as "longitudinal" and "transverse" as well as "vertical" and "horizontal" are intended to refer to the normal arrangement of a cable duct, to the orientations of the drawings and to the condition in which a separator element is fitted in a duct. In particular, "longitudinal direction" is defined as the main extension direction of the duct and hence of the cables therein, "longitudinal plane" defines a vertical plane identified by the longitudinal direction, "transverse direction" defines the direction perpendicular to a longitudinal plane, and "transverse plane" or "transverse cross-section" defines a section plane perpendicular to the longitudinal direction of the duct.

Figure 1, which has already been mentioned in the introductory portion of this description with reference to the prior art, shows a cable duct 1 of the type generally known as a "mesh duct", comprising a series of longitudinal wires 3 and a series of transverse wires 5 connected to one another to form a grid.

Each of the transverse wires 5 includes a normally straight base portion 5a from which a pair of parallel arms 5b extends transversely relative to the base portion in a generally U-shaped arrangement.

The longitudinal wires which are disposed in the region of the base portions 5a of the transverse wires are referred to below as "base longitudinal wires" 3a and define therewith a bottom surface or base of the duct. The longitudinal wires which are disposed in the region of the parallel arms 5b of the transverse wires are referred to below as "wall longitudinal wires" 3b and there may be one or more of them per side, according to the height of the duct. The base and the side walls of the duct delimit a cable-housing space.

The cable-housing space can be divided into adjacent longitudinal compartments by means of one or more separator elements 10 of which a known, longitudinal-plate embodiment is shown in Figure 1.

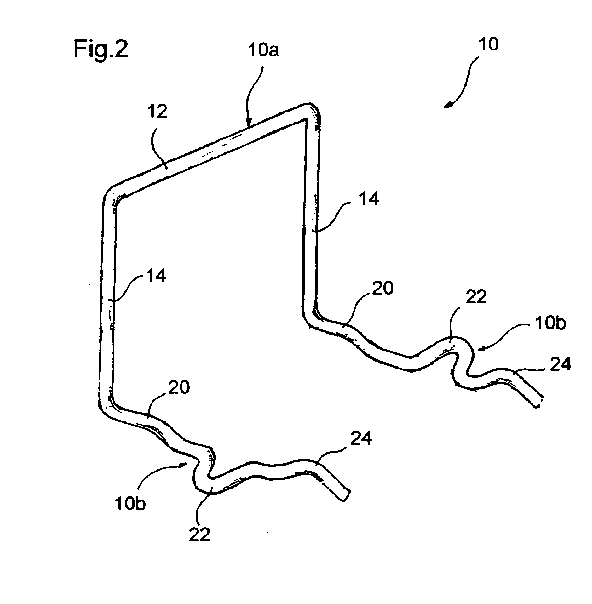

A separator element 10 according to the invention for a mesh cable duct of the type described above is described with reference to Figure 2.

The separator element 10 is formed by a metal wire, for example, a steel wire preferably with a diameter of 3.5 mm, produced by the shearing and shaping of a crude drawn wire, optionally plastics coated to ensure electrical insulation of the element.

In general, the wire is bent in a manner such that, in the installed condition, it is coupled with a mesh of the base of the duct and has a portion which projects upwards into the cable-housing space.

More specifically, the separator element 10 comprises a portion of wire 10a which is bent into an inverted U-shape formed by an intermediate longitudinal section 12 from which two, preferably parallel, transverse sections 14 extend, and a pair of transverse arms 10b for coupling with the base of the duct; the transverse arms 10b extend in a direction substantially perpendicular to the plane in which the portion 10a lies, as extensions of the transverse sections 14 of the U-shaped portion.

Each transverse arm 10b has, in the direction away from the section 14 of the portion 10a towards the free end, an initial section 20 including at least one curved part with its concavity facing downwards, an intermediate section 22 forming a loop in the horizontal plane reached by the section 20, and an end section 24 which projects from the plane in which the section 22 lies and is bent so that it also has a downwardly-facing concavity.

In the currently preferred embodiment illustrated, the section 12 of the portion 10a has a length which is slightly less than the intervals between the transverse wires of the duct. The initial section 20 and the end section 24 of each transverse arm 10b define, with the section 14 of the portion 10a, a respective transverse plane. The section 20 includes an initial part and an end part which are arranged in offset horizontal planes - that is, an upper plane and a lower plane - and which are connected by an S-shaped bent part, the section 22 forms a loop which is convex towards the outside of the element and the section 24 is shaped with a generally inverted V-shaped configuration.

The separator element 10 thus formed is resiliently deformable by movement towards or away from one another of the transverse arms 10b, and optionally of the transverse sections 14 of the portion 10a. The temporary deformation brought about by an operator exerting a slight force on the transverse arms manually enables the element to be engaged with the base of a duct.

In the preferred embodiment, to install a separator element, access to the cable-housing space is gained through the opening of the duct and the initial sections 20 and the end sections 24 of both coupling arms are arranged above respective portions of a pair of adjacent base longitudinal wires 3a; the intermediate sections 22 of the coupling arms are fitted beneath the base portions 5a of the transverse wires constituting, with the above-mentioned longitudinal wires, one base mesh of the duct.

In an installed condition, the portion 10a can define a plane of separation between two compartments of the cable-housing space in which the element 10 is disposed and the transverse arms 10b are engaged with a mesh of the base of the duct, for example, formed by a pair of base portions 5a of adjacent transverse wires superimposed on a pair of adjacent base longitudinal wires 3a, so as to achieve a configuration of firm coupling of the separator element with the duct.

In this condition, the sections 20 of the two coupling arms 10b bear on respective portions of a first base longitudinal wire 3a forming part of the coupling mesh, the initial parts of those sections extending over the said portions of the first longitudinal wire and the downwardly-bent parts extending partially around the said portions; the sections 24 bear on respective portions of a second longitudinal base wire 3a of the mesh, preferably adjacent the first, the downwardly-bent parts of those sections extending over and partially around the said portions of the second longitudinal wire. At the same time, the looped intermediate sections 22 of the two coupling arms 10b bear upwardly against the base portions 5a of respective transverse wires from below. The sections 20 and 24 and the intermediate section 22 thus interfere with the respective wires of the base mesh on opposite sides of a base plane of the duct defined by the points of contact between longitudinal and transverse wires so as to anchor the separator element to the duct.

On the one hand, the arrangement of portions of the coupling arms 10b on top of the base longitudinal wires 3a with both arms 10b inside the mesh of the duct, in the plane defined by the base portions 5a of the transverse wires, helps to restrain the separator element against sliding on the base of the duct in a longitudinal direction.

On the other hand, the arrangement of portions of the coupling arms 10b at least partially around the base longitudinal wires 3a of the mesh of the duct helps to restrain the separator element against sliding on the base of the duct in a transverse direction.

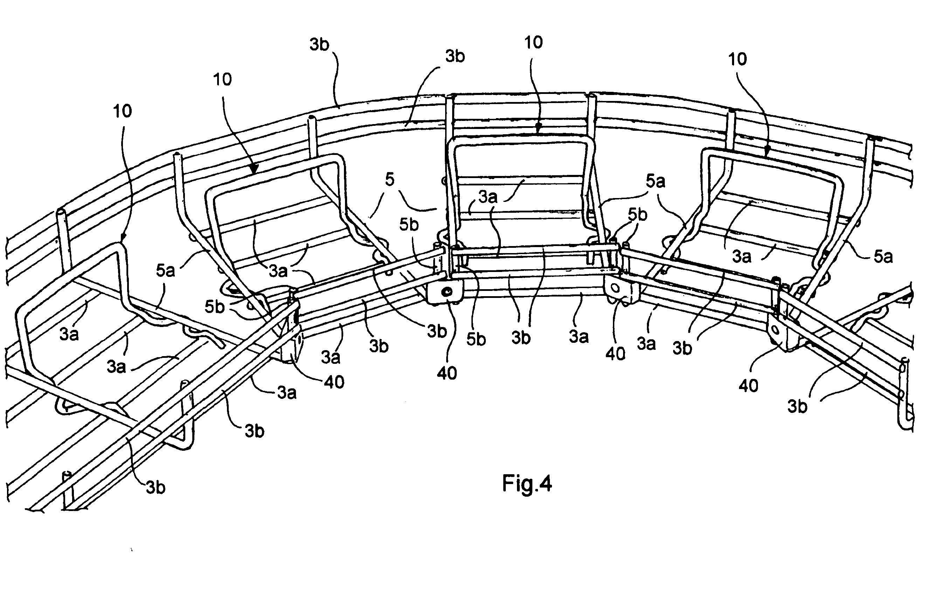

Figure 4 shows, by way of example, the use of separator elements 10 according to the invention in a portion of mesh cable ducting with a flat bend.

A flat bend is formed from a straight duct by shearing and removing base longitudinal wires 3a and wall longitudinal wires 3b on the inside of the bend forming part of alternate modules of the duct, by subsequent bending of the remaining wall longitudinal wires 3b of the cut out modules until the vertical arms 5b of the transverse wires of adjacent remaining modules are brought together, and by joining together the above-mentioned vertical arms 5b of the duct modules thus brought together, by means of clamps 40 or other connecting elements.

The separator elements of the invention are easily installed by engagement on a mesh of each remaining module.

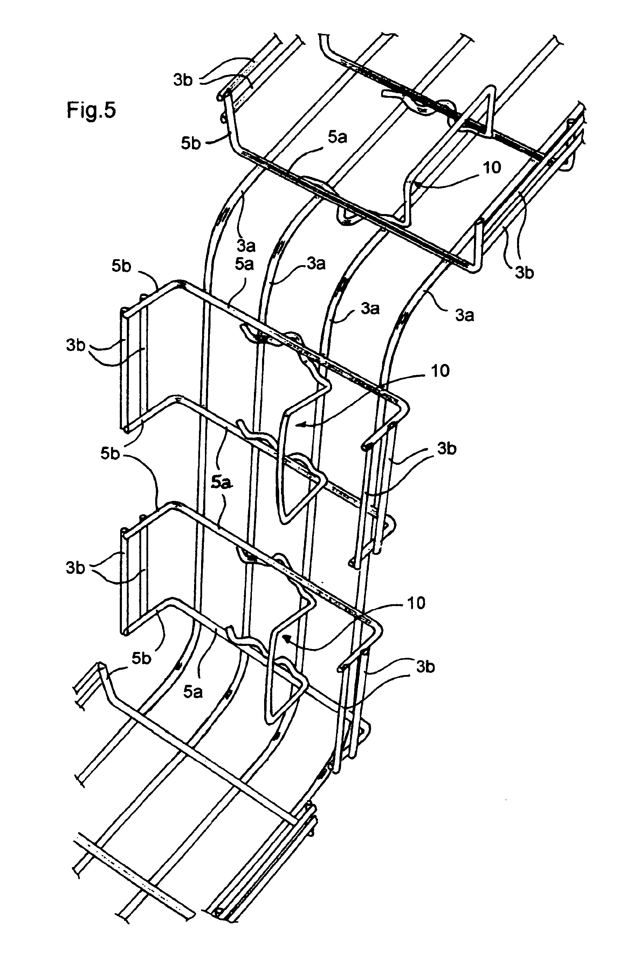

Figure 5 shows, by way of example, the use of separator elements 10 according to the invention in a mesh cable-ducting section with an upward bend.

An upward bend is formed from a straight duct by shearing and removing the portions of the wall longitudinal wires 3b forming part of the modules of the duct that are affected by the bend and by subsequent bending of the remaining base longitudinal wires 3a of the cut out modules.

The separator elements of the invention are easily installed by engagement on a mesh of each remaining module.

It will be noted that the construction proposed in the foregoing description is purely an example and is not limiting of the present invention. A person skilled in the art will easily be able to implement the invention in other embodiments which, however, do not depart from the principles set out herein and are therefore included within the scope of protection of the present invention defined by the appended claims.

This applies in particular to the possibility of forming the portion of wire 10a which can define the plane of separation between the compartments of the cable-housing space with a configuration other than the U-shaped configuration described and illustrated, an M-shaped or Ω-shaped configuration or yet another configuration being equally possible.

In one possible alternative embodiment, the separator element is suitable for coupling with a base mesh of the duct "from outside" whereby the longitudinal section 12 of the portion 10a has a length slightly greater than the intervals between the transverse wires 5 of the duct, and the intermediate section 22 of each transverse coupling arm 10b forms a loop which is convex towards the interior of the element.

In a further possible alternative embodiment, the separator element is shaped in a manner such that it can be coupled with the base of the duct "from below". In this case, each transverse coupling arm 10b has an initial section 20 including at least one bent part having its concavity facing upwards, an intermediate section 22 forming a loop in the horizontal plane reached by the section 20, and an end section 24 disposed below the plane in which the section 22 lies and shaped with a generally V-shaped configuration so that it also has a concavity facing upwards. To install the element, access to the cable-housing space is gained from below the duct through a mesh of the base, the initial sections 20 and the end sections 24 of both transverse coupling arms are arranged in contact with respective portions of a pair of adjacent base longitudinal wires, and the intermediate sections 22 of the said arms are fitted above the base portions of respective transverse wires.

## Claims

1. A separator element (10) for a mesh cable duct (1) having a base and a pair of side walls which delimit a cable-housing space and are obtained by the intersection of a series of longitudinal wires (3; 3a, 3b) and a series of transverse wires (5; 5a, 5b),
the separator element (10) being suitable to be coupled releasably with the duct (1) and being adapted to divide the cable-housing space along at least a portion of the duct (1) into a pair of adjacent longitudinal compartments,
**characterized in that** the separator element (10) is formed by a metallic wire which is bent in a manner such as to be coupled with a mesh of the base of the duct (1) and to have a portion (10a) which projects into the cable-housing space.

2. A separator element (10) according to Claim 1, in which the wire portion (10a) which is intended to project into the cable-housing space has a shape which defines a plane of separation between two compartments of that space.

3. A separator element (10) according to Claim 2, in which the wire has a pair of transverse arms (10b) for coupling with the base of the duct (1), which arms are directed in a direction substantially perpendicular to the plane of separation and are adapted to engage with a mesh of the base so as to reach a configuration of firm coupling of the separator element (10) with the duct (1).

4. A separator element (10) according to Claim 3, in which the portion of wire (10a) which defines the plane of separation is bent with a general U-shaped configuration including an intermediate section (12) from which two parallel and transverse sections (14) extend, and each transverse arm (10b) for coupling with the base of the duct (1) extends from the end of a respective transverse section (14) of the U-shaped wire portion (10a).

5. A separator element (10) according to Claim 3, **characterized in that** each transverse arm (10b) for coupling with the base of the duct (1) has at least one interference portion (20, 24) adapted to engage with a portion of a longitudinal wire (3a) and at least one interference portion (22) adapted to engage with a portion (5a) of a transverse wire both forming part of the mesh.

6. A separator element (10) according to Claim 5, **characterized in that** each transverse coupling arm (10b) includes:
- an intermediate section (22) which is bent into a loop and is adapted to cooperate with a portion (5a) of transverse wire in a base plane of the duct (1), and
- a pair of end sections (20, 24) which are arranged on opposite sides of the intermediate section (22) and are adapted to cooperate with portions of respective longitudinal wires (3a),
so that, in a condition in which the element (10) is coupled with the duct (1), the pair of end sections (20, 24) and the intermediate section (22) engage with the respective portions (3a, 5a) of wires of the mesh on opposite sides of the base plane of the duct (1) so as to anchor the element (20) to the base of the duct (1).

7. A separator element (10) according to Claim 5, **characterized in that** each transverse coupling arm (10b) includes at least one section (20, 24) adapted to cooperate in abutment with a portion (5a) of a transverse wire so as to restrain the separator element (10) against sliding on the base of the duct (1) in a longitudinal direction.

8. A separator element (10) according to Claim 5, **characterized in that** each transverse coupling arm (10b) includes at least one section (20, 24) adapted to extend around a portion of at least one longitudinal wire (3a) in a manner such as to restrain the separator element (10) against sliding on the base of the duct (1) in a transverse direction.

9. A mesh cable duct (1) comprising at least one separator element (10) as defined in Claims 1 to 8.

## Patentansprüche

1. Trennelement (10) für einen Gitterkabelkanal (1) mit einem Grund und einem Paar Seitenwände, die einen Kabelgehäuseraum begrenzen und durch die Überschneidung einer Reihe von längsverlaufenden Drähten (3; 3a, 3b) und einer Reihe von querverlaufenden Drähten (5; 5a, 5b) erhalten werden,
wobei das Trennelement (10) geeignet ist, um mit dem Kanal (1) lösbar gekoppelt zu sein, und angepasst ist, um den Kabelgehäuseraum entlang zumindest eines Abschnitts des Kanals (1) in ein Paar benachbarter längsverlaufenden Felder zu unterteilen,
**dadurch gekennzeichnet dass,**
das Trennelement (10) durch einen metallischen Draht ausgebildet ist, der derart gebogen ist, um mit einem Gitter des Grunds des Kanals (1) gekoppelt zu sein, und um einen Abschnitt (10a) aufzuweisen, der in den Kabelgehäuseraum vorsteht.

2. Trennelement (10) nach Anspruch 1, wobei der Drahtabschnitt (10a), der vorgesehen ist, um in den Kabelgehäuseraum vorzustehen, eine Form hat, die eine Trennebene zwischen zwei Felder dieses Raums definiert.

3. Trennelement (10) nach Anspruch 2, wobei der Draht ein Paar querverlaufender Arme (10b) zum Koppeln mit dem Grund des Kanals (1) hat, wobei die Arme in einer Richtung gerichtet sind, die im Wesentlichen senkrecht zu der Trennebene ist, und sie angepasst sind, um mit einem Gitter des Grunds einzugreifen, um eine Gestaltung einer stabilen Kopplung des Trennelements (10) mit dem Kanal (1) zu erreichen.

4. Trennelement (10) nach Anspruch 3, wobei der Abschnitt des Drahts (10a), der die Trennebene definiert, in einer allgemein U-förmigen Gestalt gebogen ist, die einen mittleren Bereich (12) aufweist, von dem sich zwei parallele und querverlaufende Bereiche (14) erstrecken, und wobei sich jeder querverlaufende Arm (10b) zum Koppeln mit dem Grund des Kanals (1) von dem Ende eines jeweiligen querverlaufenden Bereichs (14) des U-förmigen Drahtabschnitts (10a) erstreckt.

5. Trennelement (10) nach Anspruch 3, **dadurch gekennzeichnet, dass** jeder querverlaufende Arm (10b) zum Koppeln mit dem Grund des Kanals (1) zumindest einen Eingriffsabschnitt (20, 24), der angepasst ist, um mit einem Abschnitt eines längsverlaufenden Drahts (3a) einzugreifen, und zumindest einen Eingriffsabschnitt (22) hat, der angepasst ist, um mit einem Abschnitt (5a) eines querverlaufenden Drahts einzugreifen, wobei beide einen Teil des Gitters ausbilden.

6. Trennelement (10) nach Anspruch 5, **dadurch gekennzeichnet, dass** jeder querverlaufende Kopplungsarm (10b) Folgendes aufweist:
- einen mittleren Bereich (22), der in eine Schleife gebogen ist und angepasst ist, um mit einem Abschnitt (5a) des querverlaufenden Drahts in einer Grundebene des Kanals (1) zusammenzuwirken, und
- ein Paar Endbereiche (20, 24), die an gegenüberliegenden Seiten des mittleren Bereichs (22) angeordnet sind und angepasst sind, um mit Abschnitten von jeweiligen längsverlaufenden Drähten (3a) zusammenzuwirken,
so dass in einem Zustand, in dem das Element (10) mit dem Kanal (1) gekoppelt ist, das Paar Endbereiche (20, 24) und der mittlere Bereich (22) mit den jeweiligen Abschnitten (3a, 5a) der Drähte des Gitters an gegenüberliegenden Seiten der Grundebene des Kanals (1) in Eingriff sind, um das Element (20) an dem Grund des Kanals (1) zu verankern.

7. Trennelement (10) nach Anspruch 5, **dadurch gekennzeichnet, dass** jeder querverlaufende Kopplungsarm (10b) zumindest einen Bereich (20, 24) hat, der angepasst ist, um mit einem Abschnitt (5a) eines querverlaufenden Drahts in Anliegekontakt zusammenzuwirken, um ein Gleiten des Trennelements (10) an dem Grund des Kanals (1) in einer längsverlaufenden Richtung zu verhindern.

8. Trennelement (10) nach Anspruch 5, **dadurch gekennzeichnet, dass** jeder querverlaufende Kopplungsarm (10b) zumindest einen Bereich (20, 24) hat, der angepasst ist, um sich um einen Abschnitt von zumindest einem längsverlaufenden Draht (3a) derart zu erstrecken, um ein Gleiten des Trennelements (10) an dem Grund des Kanals (1) in einer querverlaufenden Richtung zu verhindern.

9. Gitterkabelkanal (1), der zumindest ein Trennelement (10) aufweist, wie es in Ansprüchen 1 bis 8 definiert ist.

## Revendications

1. Elément séparateur (10) pour un conduit de câbles en treillis (1) ayant une base et une paire de parois latérales qui délimitent un espace de logement de câble et sont obtenues par l'intersection d'une série de fils longitudinaux (3; 3a, 3b) et une série de fils transversaux (5; 5a, 5b),
l'élément séparateur (10) convenant pour être couplé de manière amovible au conduit (1) et étant adapté pour diviser l'espace de logement de câble le long d'au moins une partie du conduit (1) en une paire de compartiments longitudinaux adjacents,
**caractérisé en ce que** l'élément séparateur (10) est formé par un fil métallique qui est plié de façon à être couplé avec un treillis de la base du conduit (1) et pour avoir une partie (10a) qui fait saillie dans l'espace de logement de câble.

2. Elément séparateur (10) selon la revendication 1, dans lequel la partie de fil (10a) qui est prévue pour faire saillie dans l'espace de logement de câble a une forme qui définit un plan de séparation entre deux compartiments de cet espace.

3. Elément séparateur (10) selon la revendication 2, dans lequel le fil a une paire de bras transversaux (10b) pour couplage avec la base du conduit (1), lesquels bras sont dirigés dans une direction sensiblement perpendiculaire au plan de séparation et sont adaptés pour venir en prise avec un treillis de la base de façon à atteindre une configuration de couplage ferme de l'élément séparateur (10) avec le conduit (1).

4. Elément séparateur (10) selon la revendication 3, dans lequel la partie de fil (10a) qui définit le plan de séparation est courbée avec une configuration en forme de U générale incluant une section intermédiaire (12) depuis laquelle deux sections transversales et parallèles (14) s'étendent, et chaque bras transversal (10b) pour couplage avec la base du conduit (1) s'étend depuis l'extrémité d'une section transversale (14) respective de la partie de fil (10a) en forme de U.

5. Elément séparateur (10) selon la revendication 3, **caractérisé en ce que** chaque bras transversal (10b) pour couplage avec la base du conduit (1) a au moins une partie d'interférence (20, 24) adaptée pour venir en prise avec une partie d'une fil longitudinal (3a) et au moins une partie d'interférence (22) adaptée pour venir en prise avec une partie (5a) d'un fil transversal formant tous deux partie du treillis.

6. Elément séparateur (10) selon la revendication 5, **caractérisé en ce que** chaque bras de couplage transversal (10b) inclut :
une section intermédiaire (22) qui est courbée en une boucle et est adaptée pour coopérer avec une partie (5a) d'un fil transversal dans un plan de base du conduit (1), et
une paire de sections d'extrémité (20, 24) qui sont agencées sur des côté opposés de la section intermédiaire (22) et sont adaptés pour coopérer avec des parties de fils longitudinaux (3a) respectifs,
de telle manière que, dans un état dans lequel l'élément (10) est couplé avec le conduit (1), la paire de sections d'extrémité (20, 24) et la section intermédiaire (22) viennent en prise avec les parties respectives (3a, 5a) de fils du treillis sur des côtés opposés du plan de base du conduit (1) de façon à ancrer l'élément (20) sur la base du conduit (1).

7. Elément séparateur (10) selon la revendication 5, **caractérisé en ce que** chaque bras de couplage transversal (10b) inclut au moins une section (20, 24) adaptée pour coopérer en butée avec une partie (5a) d'un fil transversal de façon à empêcher l'élément séparateur (10) de glisser sur la base du conduit (1) dans une direction longitudinale.

8. Elément séparateur (10) selon la revendication 5, **caractérisé en ce que** chaque bras de couplage transversal (10b) inclut au moins une section (20, 24) adaptée pour s'étendre autour d'une partie d'au moins un fil longitudinal (3a) de façon à empêcher l'élément séparateur (10) de glisser sur la base du conduit (1) dans une direction transversale.

9. Conduit (1) de câble en treillis comprenant au moins un élément séparateur (10) selon les revendications 1 à 8.
